(19) **Europäisches Patentamt**
**European Patent Office**
**Office européen des brevets**

(11) Veröffentlichungsnummer: **0 407 889 A1**

(12) **EUROPÄISCHE PATENTANMELDUNG**

(21) Anmeldenummer: **90112822.3**

(22) Anmeldetag: **05.07.90**

(51) Int. Cl.⁵: **C08J 3/16**, C08J 3/05, C04B 24/26, C04B 28/02, //(C04B28/02,24:20,24:26)

(30) Priorität: **14.07.89 DE 3923229**

(43) Veröffentlichungstag der Anmeldung: **16.01.91 Patentblatt 91/03**

(84) Benannte Vertragsstaaten: **AT BE CH DE FR GB IT LI NL SE**

(71) Anmelder: **BASF Aktiengesellschaft**
**Carl-Bosch-Strasse 38**
**D-6700 Ludwigshafen(DE)**

(72) Erfinder: **Beckerle, Wilhelm Friedrich**
**Beethovenstrasse 20 1/2**
**D-6712 Bobenheim-Roxheim(DE)**
Erfinder: **Dersch, Rolf, Dr.**
**Albrecht-Duerer-Ring 16**
**D-6710 Frankenthal(DE)**
Erfinder: **Franzmann, Gernot, Dr.**
**Im Woogtal 13**
**D-6719 Bobenheim(DE)**
Erfinder: **Gareiss, Brigitte, Dr.**
**Schillerstrasse 65**
**D-6700 Ludwigshafen(DE)**
Erfinder: **Leber, Ludger, Dr.**
**Mainstrasse 4**
**D-6701 Dannstadt-Schauernheim(DE)**

(54) **In Wasser redispergierbare Polymerisat-Pulver, die durch Versprühen von wässrigen Polymerisat-Dispersionen herstellbar sind, und ihre Verwendung als Zusatzmittel zu hydraulischen Bindemittel.**

(57) In Wasser redispergierbare Polymerisat-Pulver, die durch Versprühen von wäßrigen Polymerisat-Dispersionen mit einem Zusatz von 3 bis 50 Gew.%, bezogen auf das Polymerisat, eines wasserlöslichen Alkali-oder Erdalkalisalzes von Phenolsulfonsäure-Formaldehyd-Kondensationsprodukten erhältlich sind, und ihre Verwendung als Zusatzmittel zu hydraulischen Bindemitteln.

EP 0 407 889 A1

EP 0 407 889 A1

## IN WASSER REDISPERGIERBARE POLYMERISAT-PULVER, DIE DURCH VERSPRÜHEN VON WÄSSRIGEN POLYMERISAT-DISPERSIONEN HERSTELLBAR SIND, UND IHRE VERWENDUNG ALS ZUSATZMITTEL ZU HYDRAULISCHEN BINDEMITTELN

Die Erfindung betrifft in Wasser redispergierbare Polymerisat-Pulver, die durch Versprühen von wäßrigen Polymerisat-Dispersionen mit einem Zusatz von 3 bis 50 Gew.% bezogen auf das Polymerisat, eines wasserlöslichen Alkali- oder Erdalkalisalzes von Phenolsulfonsäure-Formaldehyd-Kondensationsprodukten erhältlich sind, und ihre Verwendung als Zusatzmittel zu hydraulischen Bindemitteln.

Es ist bekannt, redispergierbare Dispersionspulver durch Versprühen von wäßrigen Polymerdispersionen in einem Heißluftstrom herzustellen. Bei Dispersionen, deren Polymerisate Glastemperaturen unterhalb von etwa 50° C besitzen, müssen Hilfsstoffe zugesetzt werden, um zu verhindern, daß die Polymerteilchen im Trockner unter Bildung von Wandbelägen und Klumpen verfilmen, und um eine ausreichende Blockfestigkeit der Pulver zu erreichen.

Als Hilfsstoffe können neben wasserunlöslichen inerten Zusätzen, wie hochdisperse Kieselsäure, auch Dispersionen von Polymerisaten mit hohem Styrolanteil (DE-A 2 238 903) oder wäßrige Copolymerisat-Lösungen auf Basis von Vinylpyrrolidon und Vinylacetat (DE-A 3 143 071) sowie wasserlösliche sulfonathaltige Kondensationsprodukte aus Melamin und Formaldehyd zugesetzt werden (DE-A 2 049 114).

Für die Herstellung besonders blockfester, in Wasser redispergierbarer Polymerisat-Pulver wird in der DE-A 3 143 070 empfohlen, ein wasserlösliches Naphthalinsulfonsäure-Formaldehyd-Kondensat in Form des Alkali-oder Erdalkalisalzes zuzusetzen. Nach diesem Verfahren können selbst aus Haftkleber-Copolymerisat-Dispersionen rieselfähige Pulver erhalten werden, die in Wasser leicht redispergierbar sind. Derartige redispergierbare Polymerisat-Pulver eignen sich z.B. als Zusätze zu hydraulischen Bindemitteln, die verflüssigend wirken und dem abgebundenen Mörtel elastische Eigenschaften verleihen.

Die nach diesem Verfahren erreichbaren Vorteile des Betons oder Mörtels werden jedoch dadurch abgeschwächt, daß die Fließfähigkeit eingeschränkt ist, was sich beispielsweise bei selbstverlaufenden Spachtelmassen nachteilig auswirkt.

Aufgabe der vorliegenden Erfindung war es daher, redispergierbare Polymerisatpulver bereitzustellen, die bei der Verwendung als Zusatzmittel zu hydraulischen Bindemitteln eine gute Fließfähigkeit garantieren.

Demgemäß wurden die eingangs erwähnten Polymerisatpulver und ihre Verwendung als Zusatzstoffe zu hydraulischen Bindemitteln gefunden.

Bevorzugte Ausführungsformen der Erfindung sind den Unteransprüchen zu entnehmen.

Die Polymerisat-Dispersionen zur Herstellung der redispergierbaren Polymerisat-Pulver können in üblicher Neise durch Emulsionspolymerisation olefinisch ungesättigter Monomerer in Gegenwart üblicher Polymerisationsinitiatoren, Emulgatoren und Dispergiermittel bei erhöhten Temperaturen, z.B. bis etwa 95° C, hergestellt werden. Die mittlere Teilchengröße kann durch an sich bekannte Maßnahmen eingestellt werden, beispielsweise über die Art und Menge der Emulgatoren: Zur Herstellung grobteiliger Polymerisat-Dispersionen sind im allgemeinen eine niedrige Emulgatormenge und nichtionische oder hochethoxilierte ionische Emulgatoren günstig. Schutzkolloide, wie beispielsweise Polyvinylalkohol, wirken sich häufig positiv aus. Auch die Polymerisation in Gegenwart eines Saatlatex kann von Vorteil sein, besonders wenn die Teilchenneubildung zurückgedrängt wird. Schließlich können grobteilige Dispersionen auch durch gezielte Agglomeration feinteiliger Latices erzeugt werden.

Bevorzugte Polymerisat-Dispersionen haben einen mittleren Teilchendurchmesser (Gewichtsmittel) von 400 bis 5000, insbesondere von 650 bis 5000 nm. Die Messung von mittleren Teilchengrößen von Polymerisatdispersionen, beispielsweise mit Hilfe der Ultrazentrifuge, ist dem Fachmann bekannt. Als Maß für die mittlere Teilchengröße einer Polymerisat-Dispersion ähnlicher Monomerenzusammensetzung kann auch der LD-Wert, d.i. die Lichtdurchlässigkeit der auf 0,01 Gew.% verdünnten wäßrigen Dispersion, als experimentell leicht zugängliche Richtgröße benutzt werden.

Bei der Herstellung der Polymerisat-Pulver kann der Polymerisatanteil der Dispersionen zwischen 30 und 65, insbesondere zwischen 45 und 60 Gew.% variieren. Die Polymerisate haben im allgemeinen Glastemperaturen zwischen +50 und -60° C, vorzugsweise werden Polymerisate einer Glastemperatur von weniger als + 25° C verwendet. Als olefinisch ungesättigte Monomere, von denen sich die Polymerisate ableiten können, seien vinylaromatische Monomere, wie Styrol, monoolefinisch ungesättigte Carbonsäureester mit meist 4 bis 14 C-Atomen, wie besonders Acryl- und Methacrylsäureester von 1 bis 8 C-Atomen enthaltenden Alkanolen, sowie Vinylester insbesondere der Essig-und Propionsäure sowie ferner Vinyllaurat und Vinylester sogenannter Versaticsäuren, genannt. Geeignet sind auch Polymerisate, die sich von Vinylchlorid und/oder Vinylidenchlorid oder von Diolefinen, wie besonders Butadien, ableiten. Zusätzlich können die Polymerisate Acrylnitril und/oder meist 3 bis 5 C-Atome enthaltende Mono- und/oder Dicarbonsäuren und/oder deren gegebenenfalls am Stickstoffatom substituierte Amide, wie besonders Acrylsäure, Methacrylsäure, Itaconsäure, Acrylsäureamid, Methacrylsäureamid, N-Methylolacryl- und -methacrylsäureamid, N-Methoxymethylacrylamid und -methacrylamid einpolymerisiert enthalten. Der Anteil an derartigen Monomeren kann in weiten Bereichen variiert werden. Er liegt bei Acrylnitril im Bereich von 0 bis 40, oft von 10 bis 30 Gew.%, bei monoolefinisch ungesättigten Monomeren mit polaren Gruppen, wie Acrylsäure oder N-Methylolmethacrylamid, oft bei 0,5 bis 5, inbesondere bei 1 bis 4 Gew.%. Ferner können die Polymerisate auch in geringen Mengen olefinisch ungesättigte Ester von Alkandiolen, wie Ethylenglykolmonoacrylat und -diacrylat und die entsprechenden Methacrylate sowie Butandiol-1,4-monoacrylat und -diacrylat und die entsprechenden Methacrylate einpolymerisiert enthalten. Schließlich kommen auch solche Polymer-Dispersionen in Frage, die Ethylen und Vinylacetat im molaren Verhältnis von meist 15 bis 85 zu 85 bis 15 einpolymerisiert enthalten.

Vorzugsweise werden Copolymerisate von Acryl- bzw. Methacrylestern von 1 bis 8 C-Atome enthaltenden Alkanolen eingesetzt, die bis zu 65 Gew.%, insbesondere 15 bis 60 Gew.% Styrol oder Gemische aus Styrol und bis 40 Gew.% bezogen auf das Styrol-Acrylnitril-Gemisch, Acrylnitril einpolymerisiert enthalten können. Bei derartigen Acrylat-Styrol-Copolymerdispersionen liegt der LD-Wert im allgemeinen unter 20 %, häufig unter 10 %.

Bei der Herstellung der Polymerisat-Pulver werden den Polymerisat-Dispersionen vor dem Versprühen wasserlösliche Alkali- und/oder Erdalkalisalze von Phenolsulfonsäure-Formaldehyd-Kondensationsprodukten in einer Menge von 3 bis 50 Gew.%, vorzugsweise von 3 bis 15 Gew.% und insbesondere 5 bis 10 Gew.%, bezogen auf den Polymerisatanteil der wäßrigen Polymerisat-Dispersionen, zugesetzt. Die Kondensationsprodukte enthalten im allgemeinen 1 bis 2, insbesondere 1 Formaldehydrest je Phenolrest und insbesondere 1 Sulfonsäuregruppe je Molekül. Sie werden bevorzugt in Form der Ha-Salze verwendet. Besonders bevorzugt sind die Erdalkalisalze und insbesondere die Ca-Salze, da diese ein nicht hygroskopisches Pulver ergeben. Derartige Salze von Phenolsulfonsäure-Formaldehyd-Kondensaten sind im Handel erhältlich.

Neben den Kondensationsprodukten können den Polymerisat-Dispersionen noch wasserunlösliche feinteilige Feststoffe, beispielsweise hochdisperse Kieselsäure oder wasserlösliche Schutzkolloide, beispielsweise Polyvinylalkohole oder Vinylpyrrolidon-(Co)-polymerisate, bei der Herstellung der Polymerisat-Pulver zugegeben worden sein.

Das Versprühen der wäßrigen Polymerisat-Dispersionen, die die Salze der Phenolsulfonsäure-Formaldehyd-Kondensationsprodukte enthalten, kann in an sich üblicher Neise, insbesondere unter Verwendung von Einstoff- oder Mehrstoffdüsen oder von Zerstäuberscheiben durchgeführt werden. Dabei werden die Dispersionen im allgemeinen in einen Warmluftstrom versprüht, in dem das Wasser verdampft. Das Versprühen kann bei atmosphärischem Druck oder unter vermindertem Druck durchgeführt werden. Im allgemeinen beträgt die Temperatur des für das Sprühtrocknen eingesetzten Warmluftstroms 100 bis 200, insbesondere 120 bis 170° C. Das Abscheiden der getrockneten redispergierbaren Polymerisat-Pulver kann in an sich üblicher Weise, insbesondere unter Verwendung von Zyklonen oder Filterabscheidern durchgeführt sein.

Auch mit vergleichsweise geringen Mengen an Phenolsulfonsäure-Formaldehyd-Kondensationsprodukten werden blockfeste Polymerisat-Pulver in hoher Ausbeute erhalten, die bei Raumtemperatur problemlos gelagert werden können, ohne zusammenbacken. Die Polymerisat-Pulver sind in Wasser leicht redispergierbar. Nach dem Aufrühren in Wasser können sie zu Filmen ausgegossen werden, die hinsichtlich ihrer Reißkraft und Reißdehnung denen aus den Primärdispersionen vergleichbar sind.

Bei ihrer Verwendung zur Modifizierung von hydraulischen Bindemitteln werden die Polymerisat-Pulver mit z.B. Zement - vorzugsweise werden 5 bis 30 Gew.% Polymerisat-Pulver, bezogen auf Zement, eingesetzt -gemischt und bei der weiteren Verarbeitung unter Anmachen mit Wasser und gegebenenfalls mineralischen Zusatzstoffen Mörtel hoher Fließfähigkeit und Flexibilität erhalten.

Auch die Biegezug- und Haftfestigkeit derartiger Mörtel liegen meist höher als bei kunststoff-freien Vergleichsproben. Neben den mechanischen Eigenschaften wird auch die Verarbeitung durch die neuen Polymerisat-Pulver vorteilhaft beeinflußt: Die Polymerisat-Pulver verleihen dem Mörtel eine flüssigere Konsistenz, die sich während der Verarbeitung nur wenig ändert. Aufgrund seiner gleichzeitig schnellen Aushärtung eignen sich die Polymerisat-Pulver daher besonders für Fließmörtel, z.B. selbstverlaufende Estriche oder Spachtelmassen.

Die in den folgenden Beispielen angegebenen Teile und Prozente beziehen sich auf das Gewicht. Die mittlere Teilchengröße (Gewichtsmittel) der Polymerisat-Dispersionen wurde mit Hilfe einer analytischen Ultrazentrifuge ermittelt. Die Glastemperaturen der Polymerisate wurden nach dem Verfahren der Differential-Thermo-Analyse bestimmt.

3

Herstellung der Polymerisat-Pulver

Die wäßrigen Dispersionen der in der folgenden Tabelle 1 angegebenen Polymerisate wurden mit der in Tabelle 2 angegebenen Menge des Calciumsalzes eines Phenolsulfonsäure-Formaldehyd-Kondensates bzw. des Calciumsalzes eines Naphthalinsulfonsäure-Formaldehyd-Kondensats versetzt. Die Mischung wurde bei 25°C in einer Menge von 80 kg/Stunde über die Zweistoffdüse eines IWK-Trockners versprüht. Mittels einer Schnecke wurde über eine weitere Düse gefällte hydrophobierte Kieselsäure in einer Menge von 3 Gew.% bezogen auf die Dispersion, zudosiert. Dem IWK-Trockner wurde gleichzeitig in einer Menge von 2300 Nm³/Stunde warmluft einer Temperatur von 120°C zugeführt und das erhaltene Produkt in einem Zyklon abgeschieden.

Die Zusammensetzungen und Kennwerte der eingesetzten Polymerdispersionen sind in Tabelle 1 aufgeführt.

Tabelle 1

| Dispersion | Polymerisat Zusammensetzung | Polymerisat gehalt % | Glastemp. °C | LD-Wert % | Mittlere Teilchengröße Gewichtsmittel nm |
|---|---|---|---|---|---|
| A | 46 Tle Styrol, 54 Tle Butylacrylat, 0,8 Tle Acrylamid, 0,8 Tle Methacrylamid | 50 | 16 | 7 | 832 |
| B | 29 Tle Styrol, 69 Tle Butylacrylat, 2 Tle Acrylamid | 55 | -7 | 36 | 234 |

Die mit den verschiedenen, in Tabelle 2 angegebenen Mengen des Phenolsulfonsäure-Formaldehyd-Kondensationsproduktes erhaltenen Polymerisat-Pulver neigten wenig bis nicht zum Verblocken (Prüfung der Blockfestigkeit bei Druck von 0,785 N/cm² bei 23°C über 24 Stunden) und konnten gegebenenfalls leicht verrieben und in wasser leicht redispergiert werden.

Eigenschaften von mit den Polymerisat-Pulvern modifiziertem Mörtel

Die Erstarrungszeit wurde an Mörteln mit einem K/Z-Verhältnis von 0,1 über die Erstarrungszeit nach Vicat (DIN 1164, Teil 5) charakterisiert.

Die Fließfähigkeit wurde an einem Mörtel folgender Zusammensetzung bestimmt:
137,0 g Zement PZ 55
71,4 g Quarzmehl W 4
141,6 g Quarzsand 0,15-0,6
13,7 g Polymerisat-Pulver
75,35 g Wasser

Ein Teil des Mörtels wurde in einen Ring von 7 cm Durchmesser und 4 cm Höhe eingefüllt und der Ring nach oben abgezogen. Der Durchmesser des auseinandergeflossenen Mörtelkuchens in cm gibt die Fließfähigkeit des Mörtels an.

Die bei den Messungen mit den erfindungsgemäßen Polymerisat-Pulvern erhaltenen Werte sind in Tabelle 2 aufgelistet. Zum Vergleich ist auch die Fließfähigkeit des Mörtels ohne Zusatz von Polymerisat-Pulver (Beispiel N) bzw. nur mit 1,37 g des Calcium-Salzes des Phenolsulfonsäure-Formaldehyd-Kondensationsprodukts (Beispiel NI) aufgeführt.

Tabelle 2

| Bsp. | Dispersion | Glastemp. °C | mittlere Teilchen- größe DW | Phenolsulfonsäure- Formaldehyd-Konden- sat Calciumsalz, Gew.%, bezogen auf Polymerisat | Erstarrungszeit nach Vicat | Fließfähigkeit cm |
|------|------------|--------------|------------------------------|------------------------------------------------------------------------|----------------------------|-------------------|
| 1 | A | 16 | 832 | 10   (= 1,37 g) | 6 h 16 Min | 26,7 |
| 2 | A |  |  | 7,5 (= 1,03 g) | 6 h 40 Min | 17,5 |
| 3 | A |  |  | 5   (= 0,69 g) | 7 h 30 Min | 13,1 |
| 4 | B | -7 | 234 | 20  (= 2,74 g) | 14 h 50 Min | 27,0 |
|  | B |  |  | 10  (= 1,37 g) | 14 h 05 Min | 17,8 |

Mörtel ohne Dispersonsplv.

| N | – | – | – | – | 3 h | 8,0 |
| NI | – | – | – | (1,37 g) | 0 h 30 Min | 16,8 |

EP 0 407 889 A1

In Tabelle 3 sind zum Vergleich die entsprechenden Werte angegeben, die erhalten werden, wenn man statt des Calcium-salzes des Phenolsulfonsäure-Formaldehydkondensates das Calcium-salz des Naphthalinsulfonsäure-Formaldehyd-Kondensates einsetzt.

Für Beispiel NII wurde entsprechend 1,37 g dieses Produktes anstelle des Polymerisat-Pulvers eingesetzt.

Tabelle 3

| Vergleichs-beispiele | Dispersion | Glastemp. °C | mittlere Teilchen-größe DW | Naphthalinsulfonsäure-Formaldehyd-Konden-sat Calciumsalz, Gew.%, bezogen auf Polymerisat | Erstarrungszeit nach Vicat | Fließfähigkeit cm |
|---|---|---|---|---|---|---|
| V 1 | A | 16 | 832 | 10 (= 1,37 g) | 9 Std. 40 Min. | 19,1 |
| V 2 | A | | | 7,5 (= 1,03 g) | 8 Std. 40 Min. | 11,8 |
| V 8 | B | -7 | 234 | 30 (= 4,11 g) | 16 Std. 37 Min. | 14,3 |
| V 10 | B | | | 20 (= 2,74 g) | 11 Std. 50 Min. | 11,0 |
| N | – | – | – | | 3 Std. | 8,0 |
| NII | – | – | – | (1,37 g) | 4 Std. | 20,1 |

EP 0 407 889 A1

**Ansprüche**

1. In Wasser redispergierbare Polymerisat-Pulver, die durch Versprühen von wäßrigen Polymerisat-Dispersionen mit einem Zusatz von 3 bis 50 Gew.% bezogen auf das Polymerisat eines wasserlöslichen Alkali- oder Erdalkalisalzes von Phenolsulfonsäure-Formaldehyd-Kondensationsprodukten erhältlich sind.

2. Polymerisatpulver nach Anspruch 1, worin die Polymerisatteilchen der wäßrigen Polymerisatdispersionen ein Gewichtsmittel der Teilchengröße zwischen 400 und 5000 nm aufweisen.

3. Polymerisatpulver nach Anspruch 1 oder 2 mit einem Zusatz von 3 bis 15 Gew.% des Salzes.

4. Polymerisatpulver nach den Ansprüchen 1 bis 3, worin das Salz ein Erdalkalisalz ist.

5. Verwendung von in Wasser redispergierbaren Polymerisat-Pulvern, die durch Versprühen von wäßrigen Polymerisat-Dispersionen mit einem Zusatz von 3 bis 50 Gew.%, bezogen auf das Polymerisat, eines wasserlöslichen Alkali- oder Erdalkalisalzes von Phenolsulfonsäure-Formaldehyd-Kondensationsprodukten erhältlich sind, als Zusatzmittel zu hydraulischen Bindemitteln.

**Europäisches Patentamt**

# EUROPÄISCHER RECHERCHENBERICHT

Nummer der Anmeldung

## EP 90 11 2822

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 445 813 (SÜDDEUTSCHE KALKSTICKSTOFF-WERKE AG) <br> * Patentansprüche 1-3,6; Seite 2, Zeile 24 - Seite 4, "... Salz bildet"; Seite 5, Zeilen 14-18 * <br> — — — | 1-5 | C 08 J 3/16 <br> C 08 J 3/05 <br> C 04 B 24/26 <br> C 04 B 28/02 // <br> (C 04 B 28/02 |
| X | GB-A-5 232 22 (CATALIN LTD) <br> * Patentanspruch 1; Seite 3, Zeile 89 - Seite 4, Zeile 100 * <br> — — — — — | 1 | C 04 B 24:20 <br> C 04 B 24:26 ) |

| | | | RECHERCHIERTE SACHGEBIETE (Int. Cl.5) |
|---|---|---|---|
| | | | C 08 J |

Der vorliegende Recherchenbericht wurde für alle Patentansprüche erstellt

| Recherchenort | Abschlußdatum der Recherche | Prüfer |
|---|---|---|
| Den Haag | 25 Oktober 90 | HALLEMEESCH A.D. |